# EUROPEAN PATENT APPLICATION

(11) **EP 4 815 357 A1**
(43) Date of publication of application: **30.09.2026**
(21) Application number: 26159945.0
(22) Date of filing: 20.02.2026
(51) Int. Cl.: H04L 5/00, H04L 1/00, H04L 27/34, H04W 52/26

(54) **COMMUNICATION METHOD, COMMUNICATION SYSTEM, TRANSMITTER, AND RECEIVER**

(30) Priority: 21.03.2025 JP 2025046407
(71) Applicant: Hitachi, Ltd., Tokyo 100-8280 (JP)
(72) Inventor: KIMURA, Hisatoshi, Tokyo, 100-8280 (JP); TANABE, Yosuke, Tokyo, 100-8280 (JP); FUNANE, Tsukasa, Tokyo, 100-8280 (JP); ITO, Makoto, Tokyo, 100-8280 (JP); WATANABE, Koichi, Tokyo, 100-8280 (JP)
(74) Representative: Mewburn Ellis LLP

(57) **Abstract**

In a communication method in a communication system including a transmitter and a receiver, the method includes steps of: in the transmitter, setting an intensity ratio and a phase difference between bases defined by two orthogonal modes, based on transmission bit information; in the transmitter, generating a transmission signal by converting the transmission bit information by using the set intensity ratio and the set phase difference; in the transmitter, transmitting the generated transmission signal as an electric wave from a transmission antenna; in the receiver, receiving the electric wave by a reception antenna and converting a reception signal of the received electric wave into a complex signal; and in the receiver, restoring the transmission bit information based on a constellation defined for the conversion using the intensity ratio and the phase difference, by comparing a constellation point of the complex signal with the constellation.

## Description

### CROSS-REFERENCE TO RELATED APPLICATION

The present application claims priority from Japanese Patent Application No. 2025-046407 filed on March 21, 2025, the content of which is hereby incorporated by reference into this application.

### TECHNICAL FIELD OF THE INVENTION

The present disclosure relates to a wireless communication technique.

### BACKGROUND OF THE INVENTION

The wireless transmission volume has been increased for higher-speed communication. Methods/directionalities of increasing the wireless transmission volume are spatial multiplexing, multilevel modulation, and larger transmission bandwidth. Quadrature amplitude modulation (QAM) is exemplified as one of the multilevel modulation methods. In QAM, bits "0" and "1" are expressed by combining the differed amplitude and phase of the electric wave, both of which are to be changed. The amplitude and the phase of the electric wave are expressed as complex coordinates (IQ coordinates) on an I-Q map. The QAM can collectively modulate a large number of bits, and is generally known as a method capable of performing much computing. Also, a communication method for an electric wave with orbital angular momentum (OAM) has been proposed as one of the spatial multiplexing methods. The electric waves with different OAM modes from one another are independent of one another. Thus, there is a multiplexing method in a combination of the different OAM modes.

Japanese Patent Application Laid-open Publication No. 2017-130792 (Patent Document 1) is exemplified as a related-art example. In the Patent Document 1, the bit information is expressed by multiplexing the OAM mode.

### SUMMARY OF THE INVENTION

For the wireless communication using the electric wave, it is necessary to increase an information amount to be superimposed and carried on the electric wave. The volume-increasing methods such as spatial multiplexing and multilevel modulation have a room for improvement, for studying a new method and the like in order to more increase the wireless transmission volume.

It is necessary to use uniform circular array (UCA) including a plurality of antenna devices for a transmitter and a receiver in a communication system for making the communication using the OAM electric wave. When the UCA is mounted on the receiver, a size of the receiver is increased. Particularly, in consideration of a case in which a mobile information processor terminal such as smartphone is the receiver, it is desirable to downsize a reception antenna as small as possible.

The present disclosure relates to the wireless communication technique, and an objective of the present disclosure is to provide a technique capable of more increasing the wireless transmission volume.

A typical embodiment of the present disclosure has the following configuration. The embodiment relates to a communication method in a communication system including a transmitter and a receiver, the method has a step of causing the transmitter to set an intensity ratio and a phase difference between bases that are set from two orthogonal modes, based on transmission bit information, a step of causing the transmitter to generate a transmission signal by converting the transmission bit information by using the set intensity ratio and the set phase difference, a step of causing the transmitter to transmit the generated transmission signal as an electric wave from a transmission antenna, a step of causing the receiver to receive the electric wave by using a reception antenna and to convert a reception signal based on the received electric wave into a complex signal, and a step of causing the receiver to restore the transmission bit information by comparing a constellation point of the complex signal with a constellation defining the conversion using the intensity ratio and the phase difference, based on the constellation.

According to the typical embodiment of the present disclosure, the wireless transmission volume of the wireless communication technique can be more increased.

### BRIEF DESCRIPTIONS OF THE DRAWINGS

FIG. 1 is a diagram illustrating a configuration of a communication system according to a first embodiment;
FIG. 2 is a diagram illustrating a configuration of a communication system according to a second embodiment;
FIG. 3 is a diagram illustrating a flow of a communication method according to the second embodiment;
FIG. 4 is an explanatory diagram illustrating a mixture state of left- and right-handed OAM modes in the second embodiment;
FIG. 5 is an explanatory diagram illustrating transmission/reception of an OAM electric wave in the second embodiment.
FIG. 6 is an explanatory diagram illustrating Equations of an OAM structured electric wave in the second embodiment.
FIG. 7 is an explanatory diagram illustrating IQ coordinates of a complex signal of a reception signal in the second embodiment.
FIG. 8 is an explanatory diagram illustrating an I-Q map of variables of QAM and OAM in the second embodiment.
FIG. 9 is a diagram illustrating an exemplary configuration of modulation in a transmitter in the second embodiment.
FIG. 10 is a diagram illustrating an exemplary flow of a bit information restoring processing in a receiver in the second embodiment.
FIG. 11 is a diagram illustrating an exemplary configuration of constellation in the second embodiment.
FIG. 12 is a diagram illustrating an exemplary configuration of table information corresponding to bit pattern in the second embodiment.
FIG. 13 is a diagram illustrating exemplary time-series data of a complex signal of a reception signal in the second embodiment.
FIG. 14 is a diagram illustrating an exemplary processing of comparing the time-series data of the complex signal of the reception signal with the constellation in the second embodiment.
FIG. 15 is a diagram illustrating an exemplary configuration using a plurality of reception signals from a plurality of reception devices in a reception antenna in a first modification example of the second embodiment.
FIG. 16 is a diagram illustrating an exemplary configuration using distant constellation points on the I-Q map as time-series data to be transmitted/received in a second modification example of the second embodiment.
FIG. 17 is a diagram illustrating an exemplary configuration of modulation in a transmitter in a third embodiment.

### DESCRIPTIONS OF THE PREFERRED EMBODIMENTS

Hereinafter, embodiments of the present disclosure will be described in detail with reference to the accompanying drawings. The same components are denoted with the same reference symbols throughout the drawings in principle, and the repetitive description thereof will be omitted. In expression of components in the drawings, actual position, size, shape, range, and the like may not be expressed in order to support the understanding of the invention.

In explaining the program processings, the programs, the functions, the processing sections, or the like may be assumed as the executors, but a hardware executor thereof is a processor or a controller, a device, a computer, a system, or the like made of the processor or the like. In the computer, the processor performs a processing based on a program loaded onto the memory while appropriately using a resource of a memory, a communication interface or the like. Thereby, a predetermined function, processing section or the like is achieved. The processor is made of a semiconductor device such as CPU, MPU, GPU, or neural processing unit (NPU). The processing can be performed on not only a software program but also a dedicated circuit. FPGA, ASIC, CPLD or the like is applicable to the dedicated circuit.

The program may be preinstalled as data on a target computer, or may be distributed as data from a program source to the target computer. The program source may be a program distribution server on communication network or be a non-transitory computer-readable storage medium such as memory card and disc. The program may be made of a plurality of modules. The computer system may be made of a plurality of apparatuses. The computer system may be made of a client-server system, a Cloud computing system, an IoT system or the like. Various items of data or information are made of, for example, a structure such as table, list or the like, but are not limited thereto. The terms such as identification information, identifier, ID, name, and number can be replaceable.

### [Solutions and Others]

The solutions according to the embodiments are as follows. In the related-art multilevel modulation method such as QAM, two variables that are the amplitude and the phase are taken into consideration. In the embodiments, two OAM variables are used as the variables of the multilevel modulation. Specifically, the embodiments employ an electric wave (also referred to as structured wave) that is a mixed wave with two OAM properties that are counterclockwise turning (in other words, left-handed vortex) and clockwise turning (in other words, right-handed vortex) of the orthogonal OAM mode. The mixture state of the left-handed vortex and the right-handed vortex in the structured wave, more specifically an intensity ratio and a phase difference therebetween are used as the two variables. Thereby, the amount of information, which is superimposed and carried on the electric wave, can be increased.

A communication system according to an embodiment makes wireless communication using the electric wave between a transmitter and a receiver. The transmitter generates the structured wave that is the mixture electric waves with the left- and right-handed OAM vortices based on transmission bit information, and transmits the structured wave from a transmission antenna (UCA). The receiver receives the structured wave by using a reception antenna, and restores the transmission bit information from a reception signal. Because of using the structured wave, the reception antenna can be made of a single antenna device, and can be downsized.

In the communication system according to the embodiments, based on the bit information to be transmitted, the transmitter determines and sets an azimuth angle and an elevation angle which are expressed by a sphere with poles that are bases defined by two orthogonal OAM modes. The transmitter converts the bit information to be transmitted, by using the determined azimuth angle and elevation angle, thereby generating a transmission signal. The transmitter transmits the generated transmission signal as the structured wave from the transmission antenna (UCA).

The receiver receives the structured wave from the transmitter by using the reception antenna, acquires the reception signal, and converts the reception signal into a complex signal. The receiver restores the transmitted bit information by performing comparison and matching between a constellation point of the complex signal and a predetermined constellation defining a rule of the conversion between the transmitter and the receiver.

In a communication method and a communication system according to embodiments, an amount of information in the increased transmission volume (particularly, multilevel modulation) of wireless transmission can be increased by using a structured wave using two variables that are an intensity ratio and a phase difference (an azimuth angle and an elevation angle corresponded thereto) in the orthogonal OAM modes.

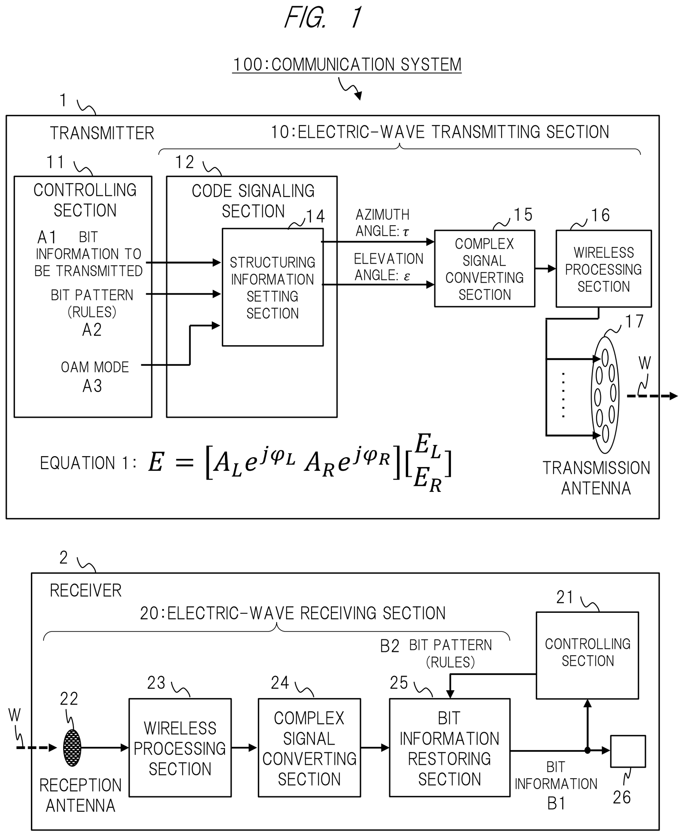

The communication method, the communication system and the like according to the embodiments will be described with reference to FIG. 1 and subsequent drawings.

### <First Embodiment>

A significant feature of a communication method, a communication system and the like according to a first embodiment is multilevel modulation using two variables that are mixture (in other words, combined) intensity ratio and phase difference of a mixture wave (in other words, combined wave) of left- and right-handed OAM vortices. The intensity ratio and the phase difference are corresponded to two variables that are an azimuth angle and an elevation angle described below. The first embodiment relates to a communication method and a communication system for transmitting a structured wave based on modulation (particularly, multilevel modulation) using two variables that are the intensity ratio and the phase difference of the mixture wave of left- and right-handed OAM modes, and for receiving and restoring the transmitted structured wave.

### [Communication System]

FIG. 1 illustrates a configuration of a communication system 100 according to the first embodiment. The communication system 100 (in other words, electric-wave transceiver system) includes a transmitter (in other words, transmitting device) 1 and a receiver (in other words, receiving device) 2. The transmitter 1 includes a controlling section 11 and an electric-wave transmitting section 10. The electric-wave transmitting section 10 includes a code signaling section 12, a complex signal converting section 15, a wireless processing section 16, and a transmission antenna 17. The code signaling section 12 includes a structuring information setting section 14.

The controlling section 11 controls the electric-wave transmission of the transmitter 1. The controlling section 11 receives, acquires, and generates bit information A1 (in other words, transmission-target information) to be transmitted, as its input. The controlling section 11 previously sets and holds information of a predetermined bit pattern A2. The controlling section 11 sets and holds information on an OAM mode A3 to be used. Although described later, the bit pattern A2 is the information equivalent to rule/guideline for how to determine and set two variables (τ, ε) shared between the transmitter 1 and the receiver 2 in the communication system 100.

The structuring information setting section 14 determines and sets the two variable values that are the azimuth angle τ and the elevation angle ε as the structuring information for the structured wave, based on the input bit information A1, the input bit pattern A2, and the input OAM mode A3.

The complex signal converting section 15 receives the determined two variable values (τ, ε) as its input, and converts them into a complex signal.

The wireless processing section 16 generates the transmission signal for the electric-wave transmission, based on the input complex signal. Specifically, the wireless processing section 16 superimposes the complex signal onto a carrier wave (baseband), thereby generating the transmission signal for transmitting the structured wave as the mixture electric wave with the left- and right-handed OAM vortices. The wireless processing section 16 controls the antenna devices of the transmission antenna 17 (such as UCA), based on the transmission signal. Thereby, the structured wave W that is the mixture electric wave with the left- and right-handed OAM vortices is transmitted from the transmission antenna 17.

Note that the structured wave is expressed by a term "E" in Equation 1 in FIG. 1. A term "EL" indicates the electric wave with the left-handed OAM vortex, a term "ER" indicates the electric wave with the right-handed OAM vortex, terms "AL" and "AR" are intensity values of the left-handed vortex and the right-handed vortex determined by the intensity ratio, respectively, and terms "ϕL" and "ϕR" are phase values of the left-handed vortex and the right-handed vortex determined by the phase difference, respectively. A term "j" indicates an imaginary unit.

The receiver 2 includes a controlling section 21, an electric-wave receiving section 20, a display device 26, and the like. The electric-wave receiving section 20 includes a reception antenna 22, a wireless processing section 23, a complex signal converting section 24, and a bit information restoring section 25.

The controlling section 21 controls the electric-wave reception of the receiver 2. The controlling section 21 previously holds and sets a predetermined bit pattern B2 that is shared with the transmitter 1 and is the same information as the bit pattern A2.

The reception antenna 22 is made of a single antenna device such as patch (microstrip) antenna. The reception antenna 22 receives an electric wave corresponding to the structured wave W. The wireless processing section 23 controls the reception antenna 22 to acquire the reception signal from the reception antenna 22. The complex signal converting section 24 converts the reception signal into the complex signal (in other words, IQ coordinates on the I-Q map). The bit information restoring section 25 restores the transmitted bit information (equivalent to the bit information A1), based on the input complex signal and the input bit pattern B2. Specifically, the bit information restoring section 25 performs comparison and matching between the time-series data of the complex signal resulted from the reception signal and constellation point groups (in other words, patterns) of the predetermined constellation based on the bit pattern B2, thereby identifying which constellation point group is corresponded to the time-series data. The restored bit information is expressed as bit information B1. The controlling section 21 receives and acquires the restored bit information B1 as its input.

The information such as the restored bit information B1 can be displayed on the display device 26. The receiver 2 may output, for example, may display a transmission bit string (bit information B2) as restoring result information on a screen of the display device 26. The output aspect is not limited to the screen displaying, and any aspect is applicable. The display device 26 may be connected to an outside of the receiver 2. A result display section is made of the display device 26. The display device 26 may be, for example, a display. The controlling section 21 (such as predetermined application software) causes the display screen of the display device 26 to display the information such as the bit information B1 or a graphical user interface. A user who uses the receiver 2 performs an input operation onto the screen of the display device 26, and can confirm the information such as the bit information B1 through the screen. The screen of the display device 26 may display not only the time-series data of the reception signal but also the information such as the bit pattern B2 (corresponding table or constellation) used for the restoring processing. The receiver 2 may cause the screen of the display device 26 to display the time-series data of the constellation points of the reception signal to be superimposed on the constellation.

Although not illustrated, the transmitter 1 may include the display device or the like. The screen of the display device of the transmitter 1 may display the information on the azimuth angle τ and the elevation angle ε of the structured wave for the bit information A1 to be transmitted, the information on the bit pattern A2 (corresponding table or constellation), or the like.

Note that the configuration is not limited to the illustrated functional block configuration, and any configuration is applicable. For example, the controlling section 11 may be mounted as a controller separated from the transmitter 1 (the electric-wave transmitting section 10). The controlling section 21 may be mounted as a controller separated from the receiver 2 (the electric-wave receiving section 20).

The transmitter 1 and the receiver 2 according to the first embodiment have the following functions. The code signaling section 12 in the transmitter 1 includes the structuring information setting section 14 for setting the intensity ratio and the phase difference (azimuth angle τ and elevation angle ε in FIG. 1) between two bases as two orthogonal modes, based on the bit information A1 to be transmitted. The mode described here may mean, for example, the left- or right-handed OAM vortex or a horizontal or a vertical polarized wave. The transmitter 1 includes the complex signal converting section 15 for generating a complex signal of the transmission signal by performing conversion (in other words, modulation) based on the predetermined bit pattern A2 by using the intensity ratio and the phase difference (azimuth angle τ and elevation angle ε in FIG. 1) determined by the structuring information setting section 14. The transmitter 1 transmits the electric wave (structured wave W) based on the generated transmission signal, from the transmission antenna 17.

The receiver 2 includes the reception antenna 22 for receiving the electric wave (structured wave W) transmitted from the transmitter 1. The receiver 2 includes the complex signal converting section 24 for converting the reception signal based on the received electric wave into the complex signal. The receiver 2 includes the bit information restoring section 25 for restoring the transmitted bit information by performing comparison and matching between the plurality of constellation points (IQ coordinates) of the complex signal and the constellation (the constellation point groups on the I-Q map), based on the predetermined bit pattern B2 corresponding to that of the transmitter 1.

One of the novel features of the first embodiment is that the structured wave W is generated by mixing the left- and right-handed OAM vortices with different intensity ratio and phase difference. The intensity ratio and the phase difference can be expressed by the azimuth angle τ and the elevation angle ε. The electric wave with different intensity ratio and phase difference, in other words, the structured wave W with the set azimuth angle τ and elevation angle ε, is used as two variables in multilevel modulation. Thereby, the first embodiment can increase the amount of information in the increased transmission volume (particularly, multilevel modulation) of the electric-wave transmission.

In the configuration of FIG. 1, the controlling section 11 in the transmitter 1 can be mounted by a circuit including a processor and a memory or by a software processing. Each component in the electric-wave transmitting section 10 can be mounted by a dedicated circuit or by a software processing. The controlling section 21 in the receiver 2 can be mounted by a circuit including a processor and a memory or by a software processing. Each component in the electric-wave receiving section 20 can be mounted by a dedicated circuit or by a software processing.

### <Second Embodiment>

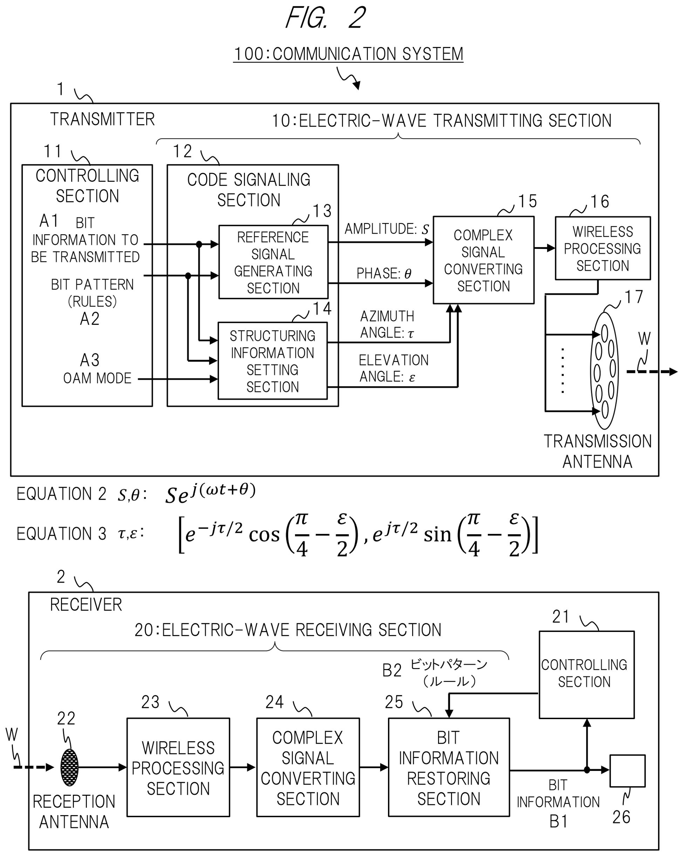

A second embodiment will be described with reference to FIG. 2 and subsequent drawings. A basic configuration of the second embodiment is similar to that of the first embodiment, and the different configuration of the second embodiment from that of the first embodiment will be described below. A difference or an additional factor of the second embodiment from the first embodiment is to use amplitude and phase as two variables of QAM.

A significant feature of the second embodiment is that the multilevel modulation is performed by using totally four variables that are the amplitude and the phase as the two variables of QAM in addition to the two variables that are the intensity ratio and phase difference between the left- and right-handed OAM vortices as similar to those in the first embodiment. In the second embodiment, by this modulation method, the reception antenna in the receiver can be achieved by a single antenna device, and thus, the receiver can be downsized. In other words, even the single reception antenna in the receiver can receive, demodulate, and restore the signal in this modulation method.

In a communication method according to the second embodiment, in order for the receiver to restore the transmission bit information, it is necessary to uniquely identify which constellation point group (pattern) of QAM or OAM is corresponded to the constellation point of the reception signal. Thus, the receiver restores the transmission bit information from the reception signal by using the constellation (an arrangement of constellation points on the I-Q map) based on the same predetermined bit pattern shared with the transmitter. In the restoring processing, the receiver identifies which pattern is corresponded to the constellation point, by performing comparison and matching between the arrangement of the constellation points (the time-series data) of the reception signal and the patterns on the constellation. Thereby, the transmission bit information can be restored.

Note that the constellation may have a case with overlapped constellation points, in other words, a case where the IQ coordinates on the I-Q map are the same as or similar to one another. Also in such cases, it is necessary to discriminate and identify which constellation point is corresponded to the reception constellation point. Thus, the second embodiment employs the identification based on the arrangement of the reception constellation points in the time-series data. Thereby, the discrimination and the identification can be achieved.

### [Communication System]

FIG. 2 illustrates a configuration of the communication system 100 according to the second embodiment. The communication system 100 includes the transmitter 1 and the receiver 2. The transmitter 1 includes the controlling section 11 and the electric-wave transmitting section 10. The electric-wave transmitting section 10 includes the code signaling section 12, the complex signal converting section 15, the wireless processing section 16, and the transmission antenna 17. The code signaling section 12 includes a reference signal generating section 13 and the structuring information setting section 14.

The controlling section 11 controls the electric-wave transmission of the transmitter 1. The controlling section 11 receives, acquires, and generates the bit information A1 to be transmitted, as its input. The controlling section 11 previously sets and holds the information on the predetermined bit pattern A2. The controlling section 11 further sets and holds the information on the OAM mode A3 to be used. Although described later, the bit pattern A2 is information equivalent to rule/guideline for how to determine and set four variables (S, θ, τ, ε) shared between the transmitter 1 and the receiver 2 in the communication system 100.

The reference signal generating section 13 generates a reference signal based on the input bit information A1 and the input bit pattern A2. Specifically, the reference signal generating section 13 determines and sets the values of the amplitude S and the phase θ of the reference signal.

The structuring information setting section 14 determines and sets the values of the azimuth angle τ and the elevation angle ε that are two valuables as the structuring information for the structured wave, based on the input bit information A1, the input bit pattern A2, and the input OAM mode A3.

The complex signal converting section 15 receives the determined four variable values (S, θ, τ, ε) as its input, and converts them into the complex signal.

The wireless processing section 16 generates the transmission signal for the electric-wave transmission, based on the input complex signal. Specifically, the wireless processing section 16 superimposes the complex signal onto a carrier wave, thereby generating the transmission signal for transmitting the structured wave that is the mixture electric waves with the left- and right-handed OAM vortices. The wireless processing section 16 controls the respective antenna devices in the transmission antenna 17 (such as UCA), based on the transmission signal. Thereby, the structured wave W that is the mixture electric waves with the left- and right-handed OAM vortices is transmitted from the transmission antenna 17.

Note that the amplitude S and the phase θ of the reference signal are expressed by the illustrated Equation 2. The azimuth angle τ and the elevation angle ε are expressed by the illustrated Equation 3.

The receiver 2 includes the controlling section 21, the electric-wave receiving section 20, the display device 26, and the like. The electric-wave receiving section 20 includes the reception antenna 22, the wireless processing section 23, the complex signal converting section 24, and the bit information restoring section 25.

The controlling section 21 controls the electric-wave reception of the receiver 2. The controlling section 21 previously holds and sets a predetermined bit pattern B2 that is shared with the transmitter 1 and is the same information as the bit pattern A2.

The reception antenna 22 is made of a single antenna device such as patch (microstrip) antenna. The reception antenna 22 receives an electric wave. The wireless processing section 23 controls the reception antenna 22 to acquire the reception signal from the reception antenna 22. The complex signal converting section 24 converts the reception signal into the complex signal (the IQ coordinates on the I-Q map). The bit information restoring section 25 restores the transmitted bit information (equivalent to the bit information A1), based on the input complex signal and the input bit pattern B2. Specifically, the bit information restoring section 25 performs comparison and matching between the time-series data of the complex signal resulted from the reception signal and the predetermined constellation based on the bit pattern B2, thereby identifying which constellation point group is corresponded to the time-series data. The restored bit information is expressed as bit information B1. The controlling section 21 receives and acquires the restored bit information B1 as its input. Also, as similar to the first embodiment, the information such as the restored bit information B1 can be displayed on the display device 26. The information of the amplitude S and the phase θ related to QAM may be displayed on the screen of the display device 26.

In FIG. 2, in the transmitter 1, the information on the predetermined bit pattern A2 is input into the reference signal generating section and the structuring information setting section. In the receiver 2, the information on the predetermined bit pattern B2 that is the same information shared with the transmitter 1 is input into the bit information restoring section 25. For example, the transmitter 1 and the receiver 2 previously hold and set the same information on the predetermined bit pattern (such as a table described later). The present invention is not limited thereto, and the information on the predetermined bit pattern may be transmitted/received between the transmitter 1 and the receiver 2 through another communication before the communication.

### [Communication Method]

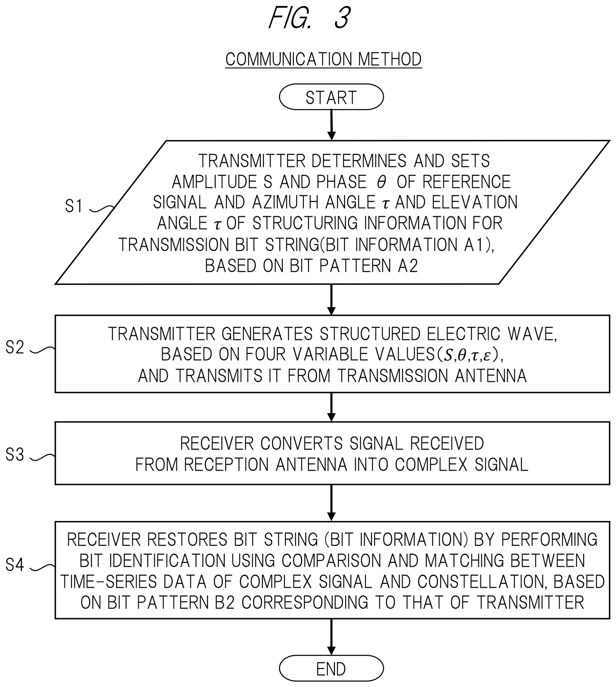

FIG. 3 illustrates a processing flow of a communication method according to the second embodiment. In step S1, the controlling section 11 in the transmitter 1 determines and sets four variable values that are the amplitude S and the phase θ of the reference signal and the azimuth angle τ and the elevation angle ε of the structuring information for the bit information A1 as a transmission bit string, based on the predetermined bit pattern A2. Specifically, the reference signal generating section 13 determines the amplitude S and the phase θ of the reference signal, and the structuring information setting section 14 determines the azimuth angle τ and the elevation angle ε of the mixture of the left- and right-handed OAM vortices.

In step S2, the transmitter 1 generates the structured wave based on the four variables (amplitude S, phase θ, azimuth angle τ, elevation angle ε), and transmits it from the transmission antenna 17. Specifically, the complex signal converting section 15 modulates a signal having the amplitude S and the phase θ of the reference signal by using a signal having the azimuth angle τ and the elevation angle ε, thereby generating the transmission signal of the structured wave. The wireless processing section 16 controls the transmission antenna 17 (UCA), based on the transmission signal of the structured wave. Thereby, the structured wave W that is the mixture of the left- and right-handed OAM vortices is transmitted from the transmission antenna 17.

In step S3, the receiver 2 receives the structured wave W by using the reception antenna 22, and the wireless processing section 22 acquires the reception signal. The receiver 2 converts the reception signal into the complex signal (constellation points on the I-Q map) by using the complex signal converting section 23.

In step S4, the receiver 2 acquires the time-series data of the complex signal, that is, the plurality of constellation points on the time axis. The receiver 2 makes the bit identification by performing comparison and matching between the time-series data of the complex signal and the constellation, based on the bit pattern B2 of the receiver corresponding to the bit pattern A2 of the transmitter. Thereby, the receiver 2 restores the bit information B1 as a reception bit string corresponding to the bit information A1 of the transmitter 1. The controlling section 21 acquires the bit information B1.

The transmitter 1 and the receiver 2 in the communication system 100 according to the second embodiment illustrated in FIG. 2 has the functions corresponding to the communication method illustrated in FIG. 3, and the transmission functions of the transmitter 1 correspond to the reception functions of the receiver 2, and the communication can be made based on a set of the correspondences.

### [Left- and Right-Handed OAM vortices]

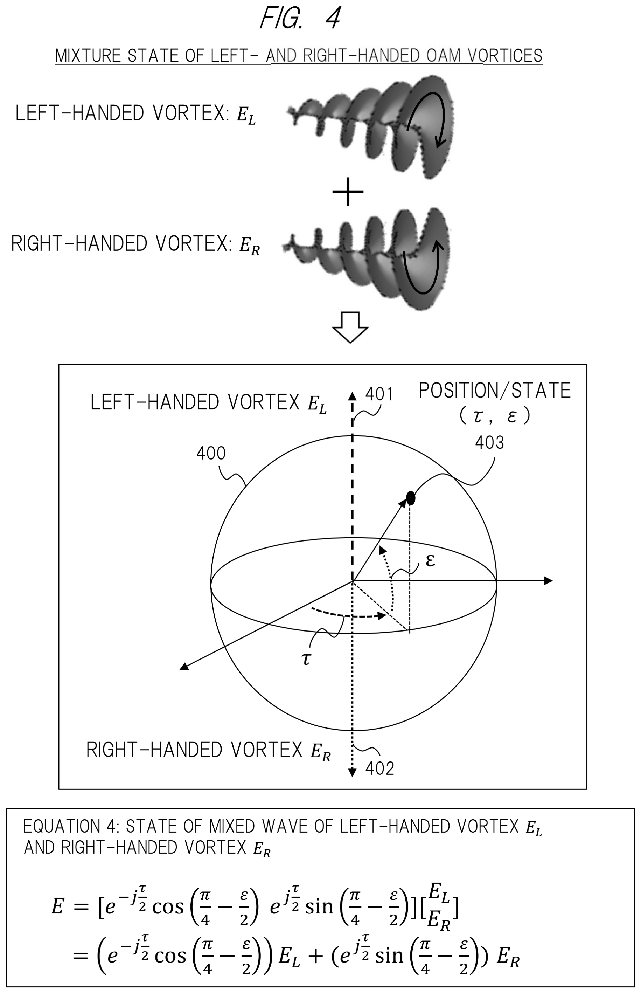

FIG. 4 is an explanatory diagram illustrating a mixture or superimposition state of the left- and right-handed OAM vortices, in other words, a state of the structured wave as the mixture wave by using two variables that are the azimuth angle τ and the elevation angle ε on a Poincare sphere. In FIG. 4, the mixture state of the left-handed vortex EL and the right-handed vortex ER is expressed as a position 403 on a three-dimensional sphere 400 corresponding to the Poincare sphere. The position 403 can be expressed as position coordinates (τ, ε) by using the azimuth angle τ and the elevation angle ε. Note that the Poincare sphere is generally used for expressing a light polarization state to be on a spherical coordinate system, and this concept is applied to the discussion herein. On the sphere 400, positions on the same longitude are expressed by the azimuth angle τ, and positions on the same latitude are expressed by the elevation angle ε.

The bases set from the left-handed vortex EL and the right-handed vortex ER that are two orthogonal OAM (in other words, independent OAM) are set as the poles of the sphere 400. These are illustrated as a first base/pole 401 and a second base/pole 402. The position 403 (τ, ε) representing the mixture state of the left-handed vortex EL and the right-handed vortex ER is expressed as a term "E" in Equation 4 in FIG. 4 by using the bases/poles.

In the expression using the sphere, the intensity ratio (in other words, mixture ratio) and the phase difference in the mixture state between the left- and right-handed OAM vortices can be rephrased as the azimuth angle τ and the elevation angle ε based on the relationship expressed in Equation 4. The intensity ratio and the phase difference in the mixture of the left-handed vortex EL and the right-handed vortex ER can be adjusted by the expression of the position 403 (τ, ε). In other words, the two variables that are the intensity ratio and the phase difference can be replaced with the two variables that are the azimuth angle τ and the elevation angle ε.

### [Transmission and Reception of OAM Electric Wave]

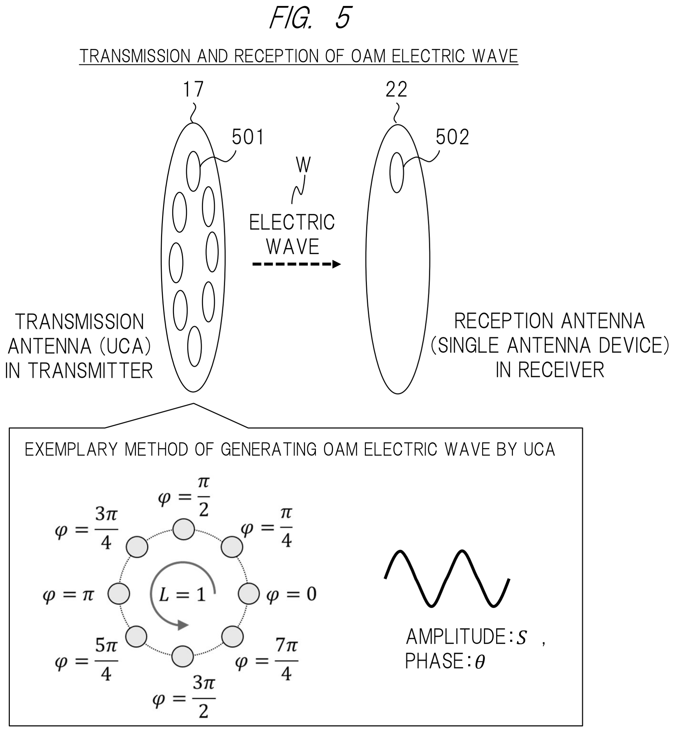

FIG. 5 is an explanatory diagram illustrating transmission and reception of the OAM structured wave W. FIG. 5 illustrates an outline of transmission and reception of the electric wave W between UCA as the transmission antenna 17 in the transmitter 1 and the reception antenna 22 in the receiver 2. The electric wave W is the structured wave W as the mixture wave of the left-handed OAM vortex EL and the right-handed OAM vortex ER according to the second embodiment. A balloon area shows an exemplary method of generating the OAM electric wave on the UCA, where emission of electric wave from eight antenna devices 501 while a phase (ϕ) shifts by π/4 generates the electric wave with the OAM mode (modulation order L = 1). The UCA is made of an array of a plurality of antenna devices 501. The reception antenna 22 is made of a single antenna device 502.

In the plurality of antenna devices 501 circumferentially arrayed on the UCA of the transmission antenna 17, a transmission phase of an electric wave emitted from each of the antenna devices 501 is controlled sequentially, for example, counterclockwise from an antenna device 501 with an angle "ϕ = 0". Thereby, the left-handed OAM electric wave can be generated. An amplitude (in other words, global amplitude) and a phase (in other words, global phase) of a signal (in other words, reference signal) that is common among all the antenna devices used for generating the left- and right-handed OAM vortices are assumed as "S" and "θ", respectively.

In the second embodiment, by the employment of the configurations of the communication system 100 of FIG. 2 and the communication method of FIG. 3, the reception antenna 22 of the receiver 2 can be made of the single antenna device 502, thereby downsizing the receiver 2.

The second embodiment generates the structured wave W made of the mixture of the left- and right-handed OAM vortices with different intensity ratio and phase difference. The intensity ratio and the phase difference can be clearly expressed as the azimuth angle π and the elevation angle ε described above (FIG. 4). In the second embodiment, the two variables that are the amplitude S and the phase θ of QAM are also used for the reference signal. Thus, the second embodiment can achieve the multilevel modulation using a total of four variables. Thereby, the second embodiment can increase the amount of information in the increased transmission volume (particularly, multilevel modulation) of the electric-wave transmission.

The receiver 2 acquires the time-series data (plurality of constellation points on the time axis) of the complex signal (constellation points on the I-Q map) from the reception signal of the structured wave W transmitted from the transmitter 1 (in steps S3 and S4 of FIG. 3). The receiver 2 restores the bit information by performing the bit identification using the comparison and matching between the time-series data of the complex signal and the constellation, based on the predetermined bit pattern B2. The bit identification using the constellation is based on the related-art QAM bit identification, but is different therefrom as identification related to a changing constellation point pattern using the time-series data. The identification will be described in detail later.

### [Modulation of Transmission Signal]

The modulation of the transmission signal in the communication method and the communication system according to the second embodiment and the like will be described. In the communication method, the transmitter 1 modulates the mixture of the left- and right-handed OAM electric waves (left-handed vortex EL and right-handed vortex ER) while changing the ratio (intensity ratio) and the phase difference therebetween, and transmits the mixture wave as the structured wave. The receiver 2 restores the transmitted bit information by performing the bit identification using the comparison and matching between the time-series data of the complex signal from the reception signal of the received electric wave and the constellation.

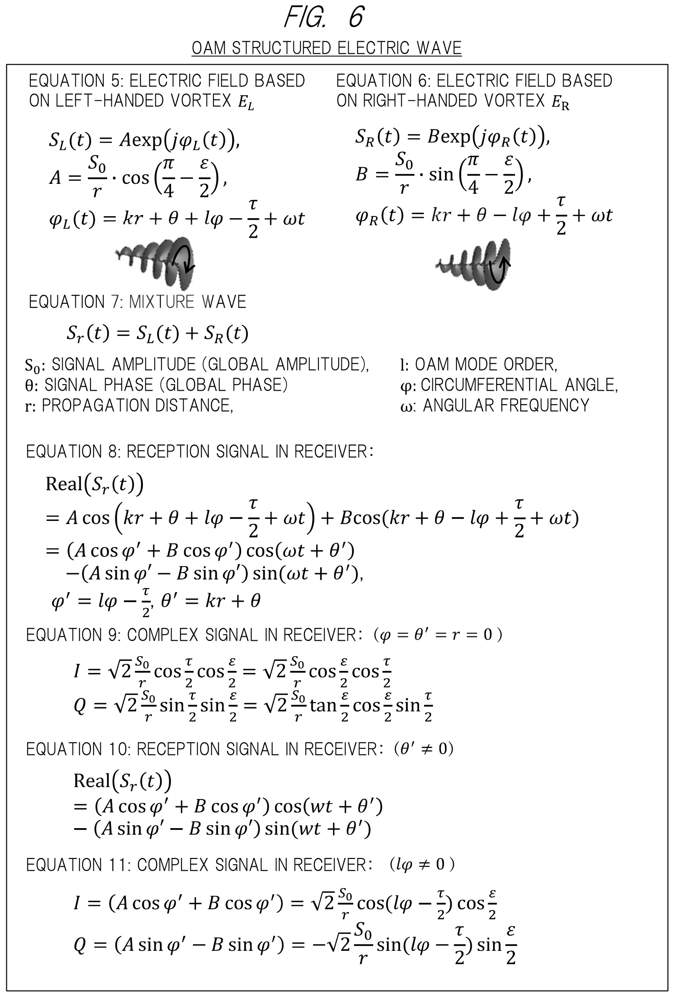

FIG. 6 illustrates the equations and the like for the structured wave as the mixture wave of the left- and right-handed OAM vortices. A term "SL(t)" in Equation 5 indicates an electric field of the left-handed vortex EL. A term "SR(t)" in Equation 6 indicates an electric field of the right-handed vortex ER. Equation 7 indicates the mixture wave of the left-handed vortex EL and the right-handed vortex ER, and is expressed as "Sr(t) = SL(t) + SR(t)". A term "S0" indicates the signal amplitude (global amplitude), a term "θ" indicates the signal phase (global phase), a term "r" indicates a propagation distance, a term "l" indicates the modulation order of the OAM mode, a term "ϕ" indicates a circumferential angle, and a term "ω" indicates an angular frequency. A term "τ" indicates the azimuth angle while a term "ε" indicates the elevation angle as described above (FIG. 4).

The reception signal in the receiver 2 can be expressed by terms "Real (Sr(t))", "ϕ'", and "θ'" in Equation 8. The complex signal converted from the reception signal is expressed by terms "I" and "Q" in Equation 9. In this case, a state with "θ' = 0", "ϕ = 0", and "r = 0" is discussed herein for simplicity.

From the Equation for the complex signal, it is found that the IQ coordinates (constellation points) are present on an oval. Thereby, a signal corresponding to position/state (azimuth angle τ, elevation angle ε) of the mixture wave can be generated and restored at the IQ coordinates on the I-Q map.

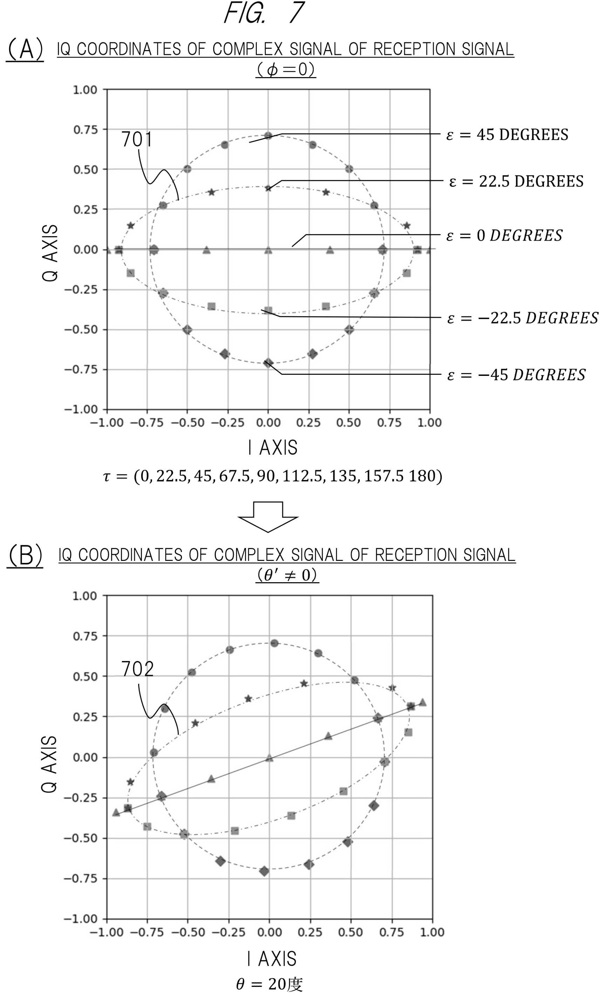

FIG. 7(A) illustrates an exemplary expression (ϕ = 0) of the IQ coordinates of the complex signal of the reception signal on the I-Q map. For example, an oval 701 includes a plurality of IQ coordinates in a case of changing τ with the ε of 22.5 degrees. Note that a distribution shape of the IQ coordinates also includes a straight line and a perfect circle as modification examples of the oval.

Next, a case "θ' # 0" is discussed. In this case, the complex signal of the reception signal is expressed as "Real (Sr (t))" in Equation 10 of FIG. 6. This corresponds to rotation of the coordinates by θ' in the I-Q signal region. Similarly, a case "lϕ # 0" is discussed. In this case, the complex signal is expressed as "I" and "Q" in Equation 11. This corresponds to rotation of the coordinates by lϕ.

FIG. 7(B) illustrates an exemplary expression (θ # 0) of the IQ coordinates of the complex signal of the reception signal on the I-Q map. For example, an oval 702 corresponds to tilt of the oval 701 of FIG. 7(A).

As described above, the complex signal of the reception signal is observed as the constellation points (IQ coordinates) on the I-Q map depending on the mixture state of the left-handed vortex and right-handed vortices of the structured wave, that is, depending on the four variable values (amplitude S, phase θ, azimuth angle τ, elevation angle ε). It is previously found that the observation points (in other words, reception points) have a predetermined pattern such as the oval as illustrated in FIG. 7. The constellation having the predetermined pattern is defined in accordance with the bit patterns A2 and B2 that define the rules for the modulation and the demodulation. Thus, the receiver 2 can restore the bit information by performing the bit identification using comparison and matching between the time-series data of the IQ coordinates of the complex signal of the reception signal and such a constellation.

### [Bit Information Restoring Processing Method]

An exemplary bit information restoring processing method in the receiver 2 will be described. In the second embodiment, the amplitude S and the phase θ of QAM (the reference signal generating section 13 of FIG. 2) are used as the two variables of the four variables.

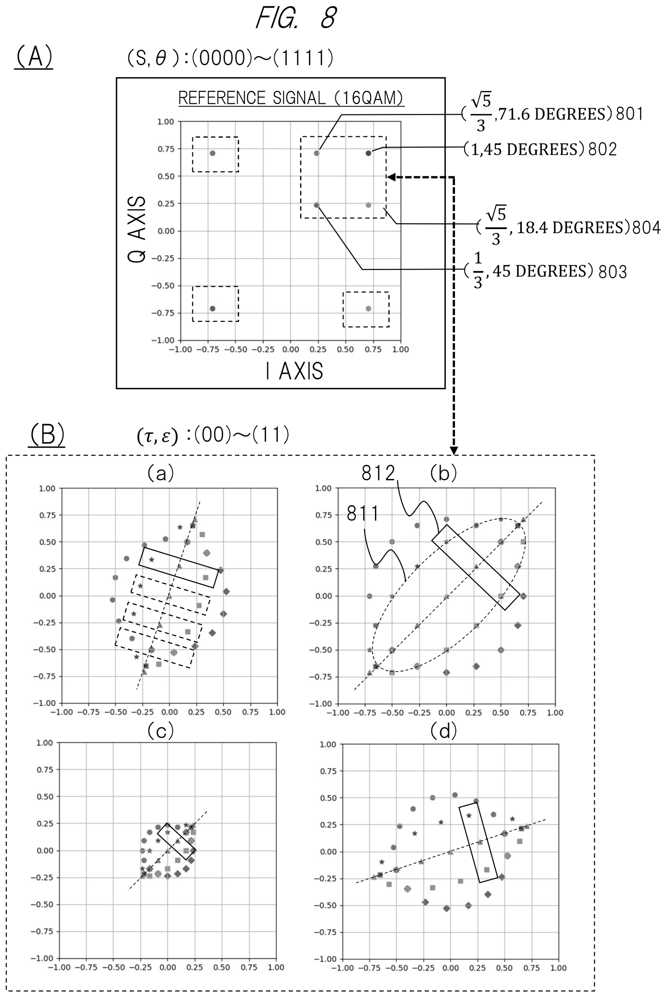

FIG. 8 illustrates exemplary I-Q maps using the four variables including (S, θ) of QAM and (τ, ε) of OAM. In the examples of FIG. 8, a case of 16QAM is discussed. The 16QAM can express 16 levels using 4 bits from (0000) to (1111). FIG. 8(A) illustrates a relationship between the reference signal (S, θ) and the I-Q map in 16QAM. For example, the amplitude S and the phase θ of the reference signal have, for example, seven levels as illustrated, such that (S, θ) = (1/3, 45 degrees), (√5/3, 18.4 degrees), (√5/3, 71.6 degrees), (1, 45 degrees), (1, 135 degrees), (1, 225 degrees), and (1, 315 degrees) as illustrated.

In the second embodiment, (azimuth angle τ, elevation angle ε) of OAM is combined with the reference signal (S, θ) by modulation. As illustrated, the IQ coordinates on the I-Q map change depending on the combination with (τ, ε). That is, the multi-levelling is achieved by using the four variables (S, θ, τ, ε).

FIG. 8(B) illustrates details of the I-Q map for four levels in an upper right quadrant of FIG. 8(A) depending on a change in the (τ, ε) values. FIG. 8(B) (a) illustrates details of a constellation point 801, FIG. 8(B) (b) illustrates details of a constellation point 802, FIG. 8(B) (c) illustrates details of a constellation point 803, and FIG. 8(B) (d) illustrates details of a constellation point 804.

In the second embodiment, the two variable values (τ, ε) are added to the two variable values (S, θ). The two variable values (τ, ε) can express the four levels using 2 bits from (00) to (11). All the four variable values can express 64 levels using 6 bits from (000000) to (111111).

For example, the details of the constellation point 802 at (1, 45 degrees) are expressed as an I-Q map (b). The distribution of the I-Q map has a tilted oval pattern as similar to FIG. 7. In the I-Q map (b), for example, a circumference of an oval 811 has a plurality of constellation points in a case with the fixed ε values of 22.5 degrees but the different τ values. This state corresponds to a state where the position 403 changes depending on the change in the azimuth angle τ on the fixed latitude (ε) on the sphere of FIG. 4. A plurality of constellation points in frame 812 indicate a transition of the constellation points from an oval to another oval, and are specifically a plurality of constellation points with the fixed τ value but the different ε values. This state corresponds to a state where the position 403 changes depending on the change in the elevation angle on the fixed longitude (ε) on the sphere of FIG. 4. The respective I-Q maps (a), (c), and (d) may be considered as similar to the I-Q map (b).

The I-Q maps (a) to (d) have respective specific patterns (constellation point groups) that are discriminable from one another. For example, these I-Q maps are different from one another in the oval tilt or size and the constellation point position. In the restoring processing, the receiver 2 may identify which one (corresponding to the combination of four variable values) of the patterns (constellation point groups) on these I-Q maps (constellations) is corresponded to the IQ coordinates (constellation points) of the complex signal of the reception signal.

However, some of the constellation point positions on these I-Q maps may be the same as or close to one another. Thus, it is also conceivable that it is difficult to identify which pattern (constellation point group) is corresponded thereto. Thus, in the comparison and matching with the constellation in the second embodiment, the identification of which pattern (constellation point group) is corresponded thereto is made by using the time-series data (change in the plurality of constellation points on the time axis) of the complex signal. In other words, the bit identification is made by determining the pattern of the change in the plurality of constellation points of the reception signal. Thereby, the bit identification can be further facilitated, and the erroneous identification can be reduced.

### [Transmitter-Modulation]

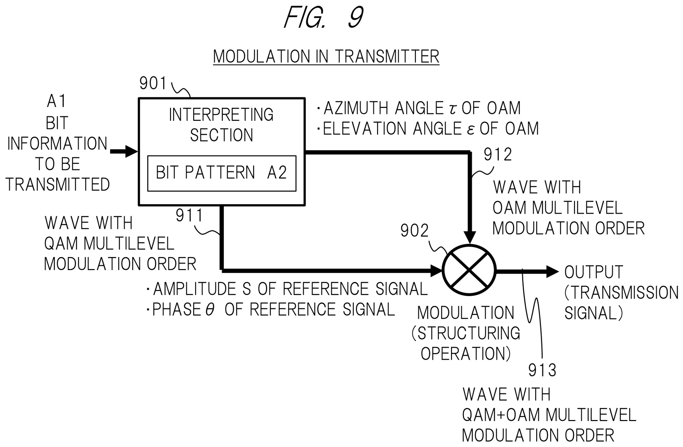

FIG. 9 illustrates an exemplary configuration of the electric-wave transmitting section 10 (FIG. 2) in the transmitter 1, and an exemplary configuration of modulation. The code signaling section 12 includes an interpreting section 901 and a modulation section 902. The information on the predetermined bit pattern A2 is previously set and stored in the interpreting section 901. The interpreting section 901 receives, as its input, the bit information A1 to be transmitted, and interprets the input bit information A1, based on the bit pattern A2, thereby setting the amplitude S and the phase θ of the reference signal of QAM. The interpreting section 901 interprets the input bit information A1, based on the bit pattern A2, thereby setting the azimuth angle τ and the elevation angle ε as the mixture wave state of the left- and right-handed OAM vortices. A signal 911 is a signal of a wave with QAM multilevel modulation order, and has the information on the amplitude S and the phase θ of the reference signal. A signal 912 is a signal of a wave with OAM multilevel modulation order, and has the information on the azimuth angle τ and the elevation angle ε.

The modulation section 902 receives, as its input, the signal 911 and the signal 912, and performs modulation to superimpose the signal 911 onto the signal 912, in other words, performs a structuring operation/structuring computation for generating the structured wave. Thereby, a signal 913 is output as the transmission signal that is the modulated signal. The signal 913 is a signal of a wave with QAM + OAM multilevel modulation order, and has the information on the four variable values.

### [Receiver-Restoring]

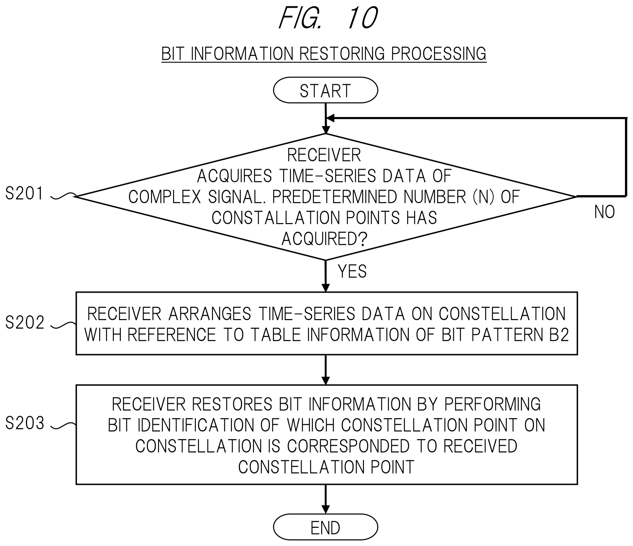

FIG. 10 illustrates an exemplary flow of the bit information restoring processing as an exemplary configuration of the bit information restoring section 25 (FIG. 2) in the receiver 2. In step S201, the bit information restoring section 25 in the receiver 2 acquires the time-series data of the complex signal of the reception signal. The time-series data may include consecutive IQ coordinates/constellation points of the complex signal, the number of which is a predetermined number (N). The predetermined number (N) is previously set. For example, the predetermined number (N) is set to three, but is not limited thereto.

When acquiring the time-series data, the number of which is the predetermined number (N) (YES), the receiver 2 arranges the time-series data of the complex signal of the reception signal on the constellation (I-Q map as illustrated in FIG. 8) with reference to the table information on the bit pattern B2 in step S202. In other words, the plurality of constellation points are plotted on the constellation in time series.

In step S203, the receiver 2 makes the bit identification of which constellation point group on the constellation is corresponded to the received constellation points by performing comparison and matching between the arrangement of the time-series data on the constellation and the constellation point group configuring the constellation. Thereby, the receiver 2 restores the bit information B1.

### [Constellation and Table Information]

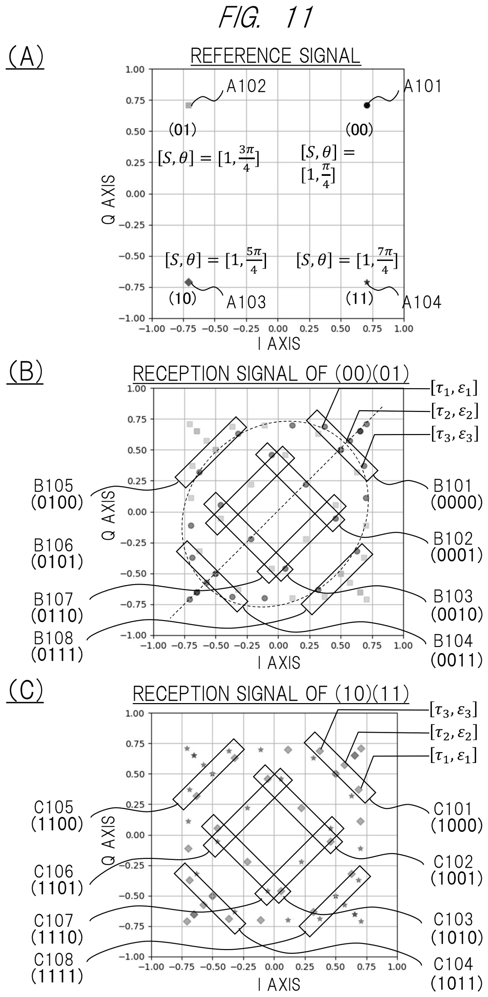

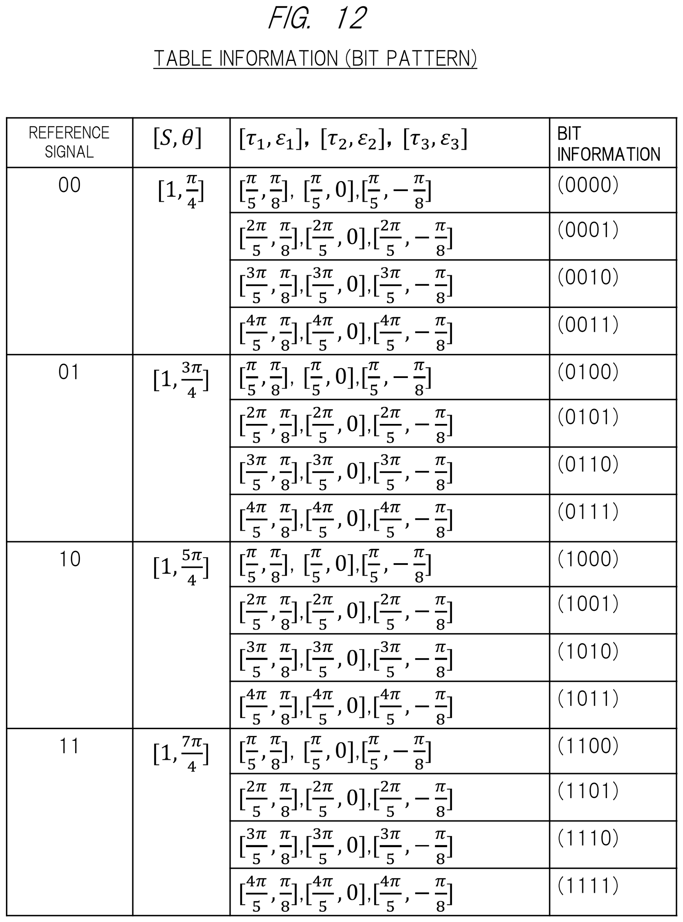

FIG. 11 illustrates an exemplary I-Q map and an exemplary constellation for the reception signal in 4QAM. FIG. 12 illustrates an exemplary configuration of the table information corresponding to the bit patterns A2 and B2 in association with the examples of FIG. 11. The description of the present example will be made in a case where the 4QAM (S, θ) expresses 2-bit/4-level data, the (τ, ε) expresses 2-bit/4-level data, thereby expressing a total of 4-bit/16-level data.

FIG. 11(A) illustrates the I-Q map of the reference signal (S, θ) in 4QAM. The constellation points (IQ coordinates) A101 to A104 express 4 levels using bits from (00) to (11). For example, the constellation point A101 expresses "(S, θ) = (1, π/4)".

FIG. 11 (B) illustrates the constellation (pattern on the I-Q map) of the structured reception signal using (τ, ε) of OAM, and illustrates a part of the constellation point A101 with bit (00) and the constellation point A102 with bit (01) in 4QAM. Similarly, FIG. 11(C) illustrates a part of the constellation point A103 with bit (10) and the constellation point A104 with bit (11) in 4QAM.

For example, frame B101 in the constellation (B) includes three points on an oval, the (τ, ε) of which are expressed as (τ1, ε1) = (π/5, π/8), (τ2, ε2) = (π/5, 0), and (τ3, ε3) = (π/5, -π/8). The bit of the three points is corresponded to "(00)*(00)=(0000)". The correspondence is previously defined in the table information (FIG. 12) on the bit patterns A2 and B2.

Similarly, the three points in B102 are corresponded to bit (0001). The three points in B103 are corresponded to bit (0010). The three points in B104 are corresponded to bit (0011).

The three points in B105 are corresponded to bit (0100). The three points in B106 are corresponded to bit (0101). The three points in B107 are corresponded to bit (0110). The three points in B108 are corresponded to bit (0111).

The same goes for the constellation (C). The illustrated frames C101 to 108 are corresponded to bits (1000) to (1111).

In terms of, for example, the three points in C101 in the constellation (C), the arrangement order of (τ1, ε1), (τ2, ε2), and (τ3, τ3) on the oval is different from the arrangement order of (τ1, ε1), (2τ, ε2), and (τ3, ε3) on the oval that are the three points in B101 in the constellation (B). The arrangement order of the constellation points of the time-series data is also determined by the bit information restoring processing (matching with the constellation).

The table information of FIG. 12 corresponds to the information on the predetermined bit pattern (A2, B2). In the table information of FIG. 12, column items include reference signal (in a case of 2 bits), amplitude S and phase θ ([S, θ]) of QAM, azimuth angle τ and elevation angle ε ([τ1, ε1], [τ2, ε2], [τ3, ε3]) of OAM, and bit information (in a case of 4 bits), and the table information defines the correspondences among the items of the information. The same information on the rules may be shared between the transmitter 1 and the receiver 2.

For example, in the first row, for bit (00) expressed by the reference signal of QAM, (S, θ) is defined as (1, π/4). For bit (00) of the reference signal in the first row, the (τ, ε) values for bits (00), (01), (10), and (11) expressed by (τ, ε) of OAM are defined in the four rows of (τ, ε). For example, the bit (00) expressed by (τ, ε) is defined such that (τ1, ε1) = (π/5, π/8), (τ2, ε2) = (π/5, 0), and (τ3, ε3) = (π/5, -π/8). That is, the four variable values express "(00)*(00)=(0000)" as illustrated in the rightmost column. Similarly, all the bit information is defined by the four variable values.

The constellation (B) of FIG. 8 and the constellations (B) and (C) of FIG. 11 can be generated by combining the QAM rules as illustrated in the constellation (A) of FIG. 8 or the constellation (A) of FIG. 11 with the rules on (τ, ε) of OAM as illustrated in FIG. 12. The table information as illustrated in FIG. 12 or the constellation data generated based on the table information may be previously shared as the bit pattern (A2, B2) between the transmitter 1 and the receiver 2.

### [Time-Series Data]

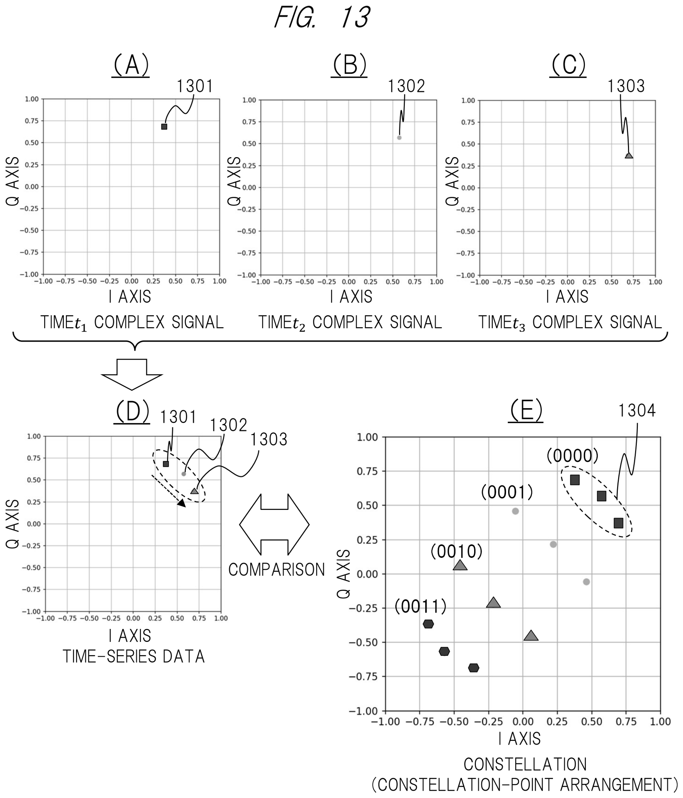

FIG. 13 is an explanatory diagram illustrating specific examples of the time-series data of the plurality of constellation points of the complex signal of the reception signal and the like. FIG. 13(A) illustrates an exemplary constellation point 1301 of one complex signal at time t1. FIG. 13(B) illustrates an exemplary constellation point 1302 of one complex signal at subsequent time t2. FIG. 13(C) illustrates an exemplary constellation point 1303 of one complex signal at subsequent time t3. In this way, the positions of the constellation points (IQ coordinates) on the I-Q map change. FIG. 13(D) illustrates time-series data in a case of use of three (N = 3) constellation points in FIG. 13 (A) to (C), where the three constellation points are plotted on the I-Q map together. Note that the constellation points 1301, 1302, and 1303 in the time-series data are plotted in this order as illustrated with an arrow.

FIG. 13(E) illustrates a part of a constellation prepared based on the bit pattern B2 (the table information of FIG. 12). The constellation is a rule or key, and shows a diagram of the constellation-point arrangement in digital modulation or demodulation. The bit information restoring section 25 in the receiver 2 performs the comparison and matching between the time-series data (D) and the constellation (E). The bit information restoring section 25 can determine that the time-series data (D) is closest to, for example, the constellation point group (pattern) 1304. The constellation point group (pattern) 1304 is corresponded to the bit (0000). Thus, the bit (0000) can be restored from the time-series data (D). The bit identification can be similarly made also for the time-series data at other time.

### [Exemplary Method of Bit Information Restoring Processing]

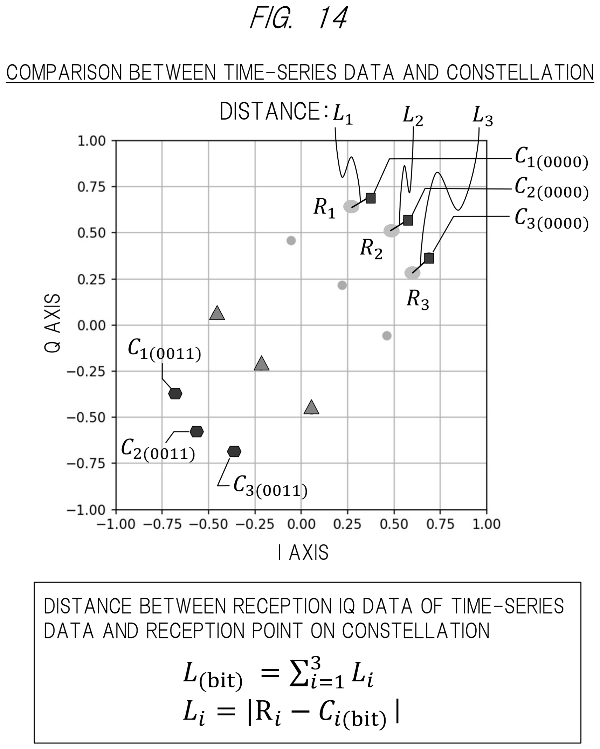

FIG. 14 illustrates an exemplary bit information restoring processing in step S203 of FIG. 10, and particularly illustrates an exemplary method of the comparison and matching with the constellation. The constellation illustrated in FIG. 14 is the same as the constellation (E) of FIG. 13. An example of reception of three items (constellation points: R1, R2, and R3) of the IQ data in time series (time: t1, t2, and t3) will be discussed. The bit information restoring section 25 plots the time-series data (constellation points: R1, R2, and R3) on the constellation (I-Q map). The bit information restoring section 25 calculates a distance between the reception IQ data of the time-series data and the constellation point group in the constellation, that is, ideal reception points Ci_{(bit)} on the I-Q map. The distance is a distance for each combination between the constellation point group (reception points Ci_{(bit)}) corresponded to certain bit and the time-series data, that is a distance between the plurality of constellation points.

The bit information restoring section 25 calculates a sum L_{(bit)} of the distances Li between the reception IQ data of the time-series data and the reception points Ci_{(bit)}. The sum L_{(bit)} is expressed as "L_{(bit)} = ΣLi (i = 1 to 3)" and "Li = |Ri - Ci_{(bit)} |". For example, a distance between the constellation point R1 as the reception IQ data and the reception point C1₍₀₀₀₀₎ is "L1". A distance between the constellation point R2 and the reception point C2₍₀₀₀₀₎ is "L2". A distance between the constellation point R3 and the reception point C3₍₀₀₀₀₎ is "L3". The sum L_{(bit)} is expressed as "L_{(bit)} = L1 + L2 + L3".

The bit information restoring section 25 finds a combination with the smallest sum L_{(bit)} in the comparison with the constellation. The bit information restoring section 25 determines that the reception points Ci_{(bit)} in the combination with the smallest sum L_{(bit)} correspond to the reception bit string (bit information B1). In the illustrated example, the reception bit string is made of the reception points C1₍₀₀₀₀₎, C2₍₀₀₀₀₎, C3₍₀₀₀₀₎, and can be restored as the bit (0000).

As described above in the example, the receiver 2 may make the bit identification by finding the constellation point group with the shortest distance from the constellation points groups on the constellation for the time-series data of the complex signal of the reception signal.

In the second embodiment, the reception antenna 22 is made of the single antenna device, but is not limited thereto, and may be made of a plurality of antenna devices, in other words, a plurality of reception antennas. If the receiver 2 is made of the plurality of reception antennas, the bit identification based on the comparison with the constellation in the bit information restoring processing may be made by using the information on the constellation points that can be simultaneously acquired by the plurality of reception antennas.

### [First Modification Example]

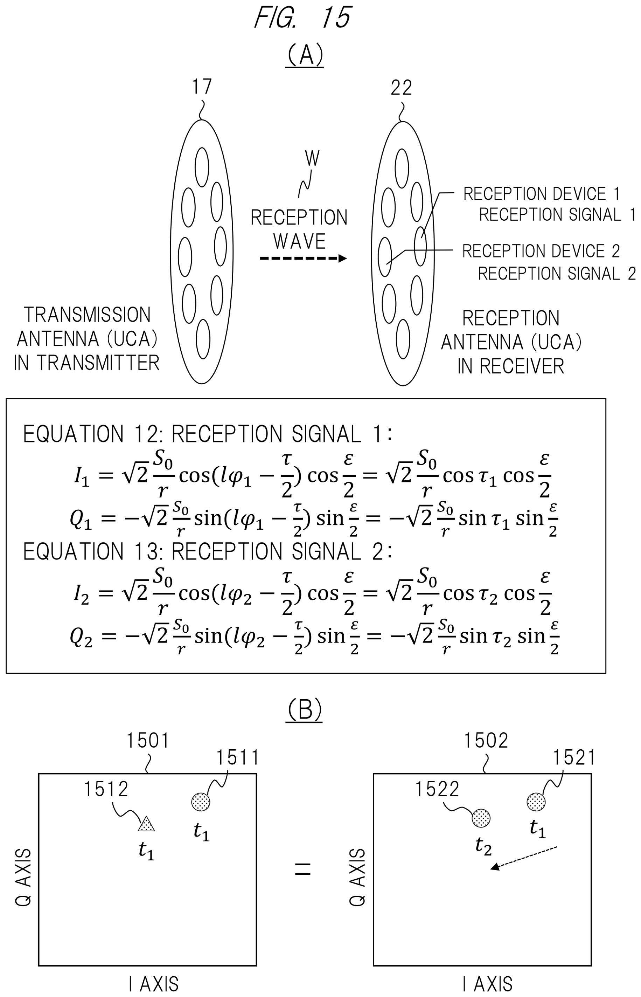

FIG. 15 is an explanatory diagram illustrating a modification example (referred to as first modification example) of the second embodiment. In this modification example, as illustrated in FIG. 15(A), the reception antenna 22 in the receiver 2 is the UCA including the plurality of antenna devices. In the plurality of antenna devices, the respective circumferential angles ϕ shift from one another as similar to the transmission antenna 17. The above-described second embodiment demonstrates that the bit identification is made by using the time-series data of the reception signal in the reception antenna 22 including the single antenna device. That is, this demonstrates the matching between the time-series change in the constellation points and the constellation pattern. To the contrary, if the reception antenna 22 includes the plurality of antenna devices (in other words, reception devices) as described in this modification example, the plurality of signals can be simultaneously received and acquired by the plurality of reception devices, and the bit identification based on the comparison and matching between the plurality of signals and the constellation can be made. Thereby, fast restoring can be achieved without standby time for acquiring the time-series data.

In FIG. 15, a case where the reception antenna 22 is made of, for example, two reception devices (a reception device 1 and a reception device 2) will be discussed. It is assumed that a reception signal 1 is acquired from the reception device 1 while a reception signal 2 is acquired from the reception device 2 at the same time. The reception signals are expressed by Equation 12 and Equation 13 in FIG. 15. The reception signal 1 (complex signal) is expressed by I1, Q1. The reception signal 2 (complex signal) is expressed by I2 and Q2.

The reception signals (IQ data) are data causing the similar effects when the azimuth angle τ is changed in the second embodiment. In the second embodiment, the time-series data including the plurality of constellation points (IQ data) of the reception signal received by one reception device is arranged on the I-Q map, and then, the bit identification is made based on the time-series change in the azimuth angle τ and the elevation angle ε. To the contrary, in this modification example, the bit identification and restoring are achieved based on the combination of the reception signals (measurement results) on the plurality of reception devices.

FIG. 15(B) illustrates a conceptual diagram of the bit identification based on the matching between the reception signals (IQ data) and the constellation in the modification example. The left drawing illustrates a plot of a reception signal 1511 on the reception device 1 at time t1 and a reception signal 1512 on the reception device 2 at the same time t1 on a constellation 1501 (not detailed). In this way, the plurality of arranged constellation points (that is the combination of measurement results on the respective reception devices) can be acquired at the same time. In the modification example, the corresponding bit can be identified based on the comparison and matching between the spatial arrangement and the constellation point group (pattern) of the constellation. The right drawing illustrates a plot of time-series change in a reception signal 1521 at time t1 and a reception signal 1522 at next time t2 on the single reception device, on a constellation 1502 (not detailed). FIG. 15(B) demonstrates that the method of the modification example in the left drawing achieves the bit identification on the constellation as similar to the method of the first embodiment in the right drawing.

### [Second Modification Example]

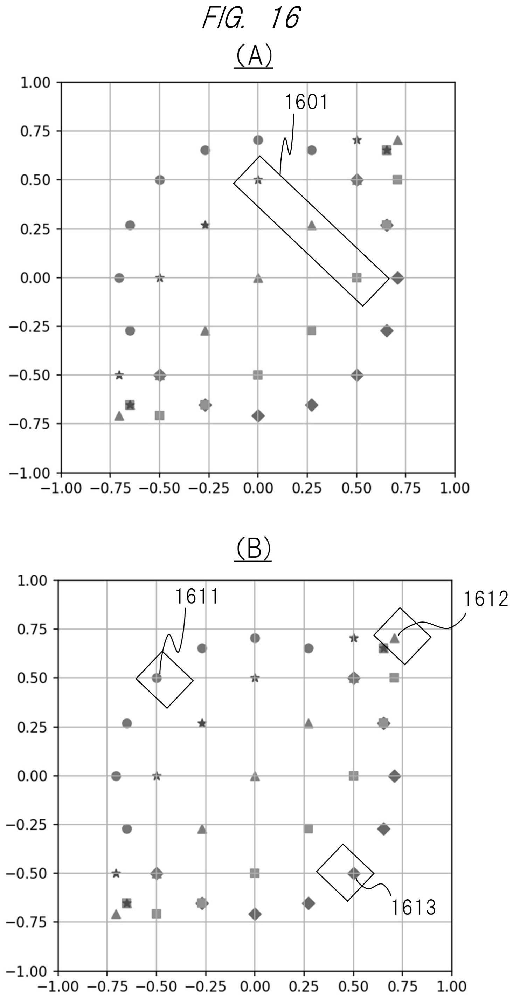

FIG. 16 is an explanatory diagram illustrating another modification example (referred to as second modification example) of the second embodiment. The second embodiment demonstrates that the bit identification is made based on the arrangement of the time-series data received by the receiver 2 in the case with, for example, the fixed azimuth angle τ and the changed elevation angle ε in determining and transmitting the plurality of constellation points to be the time-series data from the transmitter 1. This bit identification is not limited thereto, and may be made using different points on the constellation (I-Q map) in order to increase the antinoise performance. The bit identification using the different distant constellation points on the I-Q map is more easily made, and increases the antinoise performance.

Thus, in this modification example, as illustrated in FIG. 16(B), three distant points on the I-Q map may be transmitted and received as the time-series data. FIG. 16(A) illustrates exemplary time-series data including three points on the constellation in the second embodiment. The three points in frame 1601 are three constellation points with the fixed azimuth angle τ and the changed elevation angle ε in transmission. The three constellation points on the I-Q map may be difficult to be identified if being close to one another in reception. FIG. 16(A) illustrates exemplary time-series data including three points on the constellation in the modification example. These three points (constellation points 1611, 1612, and 1613) are three points obtained by changing the variable values (azimuth angle τ, elevation angle ε) to make the three points on the I-Q map are distant from one another between consecutive times in transmission. Since the three constellation points in reception on the receiver 2 are distant from one another on the I-Q map, the bit identification based on the comparison with the constellation point group (pattern) on the constellation is easily made.

Although not limited, a method of selecting the plurality of distant constellation points on the I-Q map is as follows. For example, a constellation point near the other axis of an oval orthogonal to a constellation point on one axis of the oval may be selected relative to the constellation point on the one axis. Alternatively, for example, the constellation points may be selected by calculating the distances between the constellation points on the I-Q map and setting the distances to be a threshold or more.

### <Third Embodiment>

A third embodiment will be described. The third embodiment is a modification example of the first embodiment. In the third embodiment, four variables (amplitude S, phase θ, azimuth angle τ, and elevation angle ε) in QAM and OAM are used as similar to the second embodiment. The third embodiment is different from the second embodiment in that the transmitter 1 divides a bit string of the bit information A1 to be transmitted into a first bit string and a second bit string as two parts. The transmitter 1 sets the variable values (amplitude S, phase θ) of QAM from the first bit string, and sets the variable values (azimuth angle τ, elevation angle ε) of OAM from the second bit string. Then, the transmitter 1 generates the transmission signal from these four variable values.

### [Communication System]

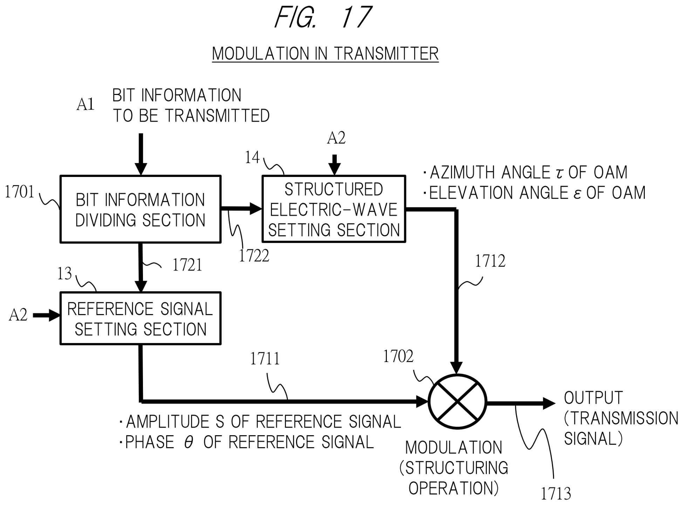

FIG. 17 illustrates an exemplary configuration of modulation in the transmitter 1 in the communication system according to the third embodiment. The code signaling section 12 in the transmitter 1 includes a bit information dividing section 1701. The bit information dividing section 1701 divides the bit information A1 (bit string) to be transmitted into a primary modulation bit string (first bit string) 1721 and a secondary modulation bit string (second bit string) 1722. The reference signal generating section 13 determines the amplitude S and the phase θ of the reference signal, based on the primary modulation bit string 1721. The structured electric-wave setting section 14 sets the azimuth τ and the elevation angle ε expressed by the sphere with poles that are bases defined by the left-handed and right-handed vortices as two orthogonal OAM modes, based on the secondary modulation bit string 1722. A signal 1711 is a signal of a wave with QAM modulation multilevel order. A signal 1712 is a signal of a wave with OAM modulation multilevel order.

The complex signal converting section 15 (a modulator 1702 corresponding thereto) converts (modulates) the signal 1711 having the amplitude S and the phase θ determined by the reference signal generating section 13 by using the signal 1712 having the azimuth angle τ and the elevation angle ε determined by the structured wave setting section 14, thereby generating a transmission signal 1713. The structuring operation in the modulator 1702 is similar to that of Equation 2 in FIG. 2. A complex signal as the transmission signal 1713 is a signal of a wave with QAM/OAM modulation multilevel order.

For example, the signal 1711 has the (S, θ) values determined depending on the first bit string, based on the bit pattern A2 (such as the table of FIG. 12 or 4QAM of FIG. 11). For example, the signal 1712 may have the (τ, ε) values determined depending on the second bit string. For example, when the bit string to be transmitted has bit (1101), the first bit string has bit (11) so as to cause a state where "(S, θ) = (1, 7π/4)" while the second bit string has bit (01) so as to cause a state where (τ1, ε1) = (2π/5, π/8), (τ2, ε2) = (2π/5, 0), and (τ3, ε3) = (2π/5, -π/8).

The third embodiment can increase the amount of information in the increased transmission volume (particularly, multilevel modulation).

The first to third embodiments demonstrate that the left- and right-handed OAM vortices are used as two orthogonal modes/bases, in other words, as two highly independent modes/bases, that is, two less correlated modes/bases, but are not limited thereto. In other examples, vertical polarized wave and horizontal polarized wave may be used as two orthogonal modes/bases.

The first to third embodiments demonstrate that the unidirectional communication is made between the transmitter 1 as a first apparatus having the transmission function and the receiver as a second apparatus having the reception function, but are not limited thereto. An aspect is also applicable, in which bidirectional communication is made between the first apparatus having both the transmission function and the reception function and the second apparatus having both the transmission function and the reception function.

## Claims

1. A communication method in a communication system including a transmitter and a receiver, comprising steps of:
in the transmitter, setting an intensity ratio and a phase difference between bases defined by two orthogonal modes, based on transmission bit information;
in the transmitter, generating a transmission signal by converting the transmission bit information by using the set intensity ratio and the set phase difference;
in the transmitter, transmitting the generated transmission signal as an electric wave from a transmission antenna;
in the receiver, receiving the electric wave by a reception antenna, and converting a reception signal of the received electric wave into a complex signal; and
in the receiver, restoring the transmission bit information based on a constellation defined for the conversion using the intensity ratio and the phase difference, by comparing a constellation point of the complex signal with the constellation.

2. The communication method according to claim 1, further comprising a step of:
in the transmitter, setting an amplitude and a phase of a reference signal, based on the transmission bit information,
wherein the step of generating the transmission signal is a step of, in the transmitter, generating the transmission signal by converting the transmission bit information by using four variables that are the set amplitude, the set phase, the set intensity ratio, and the set phase difference.

3. The communication method according to claim 2,
wherein the step of generating the transmission signal is a step of, in the transmitter, generating the transmission signal by modulating a signal with the set amplitude and the set phase by using a signal with the set intensity ratio and the set phase difference.

4. The communication method according to claim 2,
wherein the step of generating the transmission signal is a step of, in the transmitter, generating the transmission signal by dividing the transmission bit information into a first bit string and a second bit string, setting a signal with the set amplitude and the set phase, based on the first bit string, and modulating the signal set based on the first bit string by using a signal with the set intensity ratio and the set phase difference, based on the second bit string.

5. The communication method according to claim 1,
wherein the step of restoring the transmission bit information is a step of, in the receiver, restoring the transmission bit information by acquiring time-series data of a plurality of constellation points of the complex signal, and comparing the plurality of constellation points of the time-series data with a plurality of constellation points of the constellation in terms of arrangement.

6. The communication method according to claim 1,
wherein the step of generating the transmission signal is a step of, in the transmitter, generating the transmission signal by performing conversion to a plurality of constellation points distant by a threshold or more on a complex space, when determining time-series data of a plurality of constellation points of a complex signal of the transmission signal from the transmission bit information.

7. The communication method according to claim 1,
wherein the two orthogonal modes are two orthogonal OAM modes.

8. The communication method according to claim 7,
wherein the two orthogonal OAM modes are a left-handed vortex and a right-handed vortex.

9. The communication method according to claim 8,
wherein the transmitter includes three or more antenna devices capable of transmitting an electric wave of the OAM mode, as the transmission antenna, and
the receiver includes one antenna device capable of receiving an electric wave of the OAM mode, as the reception antenna.

10. The communication method according to claim 1,
wherein the step of setting the intensity ratio and the phase difference is a step of, in the transmitter, setting an azimuth angle and an elevation angle expressed by a sphere with the bases as poles, and
the step of generating the transmission signal is a step of, in the transmitter, converting the transmission bit information by using the set azimuth angle and the set elevation angle.

11. The communication method according to claim 1,
wherein the transmitter includes two or more antenna devices as the transmission antenna,
the receiver includes two or more antenna devices as the reception antenna, and
the step of restoring the transmission bit information is a step of, in the receiver, restoring the transmission bit information by acquiring a plurality of constellation points of the complex signal received at the same time by the two or more antenna devices of the reception antenna, and comparing the plurality of constellation points with a plurality of constellation points of the constellation in terms of arrangement.

12. A communication system including a transmitter and a receiver,
wherein the transmitter sets an intensity ratio and a phase difference between bases defined by two orthogonal modes, based on transmission bit information,
the transmitter generates a transmission signal by converting the transmission bit information by using the set intensity ratio and the set phase difference,
the transmitter transmits the generated transmission signal as an electric wave from a transmission antenna,
the receiver receives the electric wave by a reception antenna, and converts a reception signal of the received electric wave into a complex signal, and
the receiver restores the transmission bit information by comparing a constellation point of the complex signal with a constellation defined for the conversion using the intensity ratio and the phase difference, based on the constellation.

13. A transmitter in a communication system including the transmitter and a receiver,
wherein the transmitter sets an intensity ratio and a phase difference between bases defined by two orthogonal modes, based on transmission bit information,
the transmitter generates a transmission signal by converting the transmission bit information by using the set intensity ratio and the set phase difference,
the transmitter transmits the generated transmission signal as an electric wave from a transmission antenna,
the receiver receives the electric wave by a reception antenna, and converts a reception signal of the received electric wave into a complex signal, and
the receiver restores the transmission bit information by comparing a constellation point of the complex signal with a constellation defined for the conversion using the intensity ratio and the phase difference, based on the constellation.

14. A receiver in a communication system including a transmitter and the receiver,
wherein the transmitter sets an intensity ratio and a phase difference between bases defined by two orthogonal modes, based on transmission bit information,
the transmitter generates a transmission signal by converting the transmission bit information by using the set intensity ratio and the set phase difference,
the transmitter transmits the generated transmission signal as an electric wave from a transmission antenna,
the receiver receives the electric wave by a reception antenna, and converts a reception signal of the received electric wave into a complex signal, and
the receiver restores the transmission bit information by comparing a constellation point of the complex signal with a constellation defined for the conversion using the intensity ratio and the phase difference, based on the constellation.
